# Europäisches Patentamt
# European Patent Office
# Office européen des brevets

(11) Publication number: **0 010 172**
**B1**

(12) **EUROPEAN PATENT SPECIFICATION**

(45) Date of publication of patent specification: **11.08.82**

(51) Int. Cl.³: **G 11 B 5/016, G 11 B 17/02**

(21) Application number: **79103512.4**

(22) Date of filing: **19.09.79**

(54) Magnetic disk file machine.

(30) Priority: **12.10.78 US 950886**

(43) Date of publication of application:
**30.04.80 Bulletin 80/9**

(45) Publication of the grant of the patent:
**11.08.82 Bulletin 82/32**

(84) Designated Contracting States:
**BE CH DE FR GB IT NL SE**

(56) References cited:
**US - A - 3 678 481**
**US - A - 4 089 029**

(73) Proprietor: **International Business Machines Corporation**
**Armonk, N.Y. 10504 (US)**

(72) Inventor: **Beuch, Wallace Eric**
**Route 2**
**Pine Island, MN 55963 (US)**
Inventor: **O'Konski, George Joseph**
**2512 11th Avenue N.W.**
**Rochester, MN 55901 (US)**
Inventor: **Rusch, Kenneth David**
**2230 48th Street N.E.**
**Rochester, MN 55901 (US)**
Inventor: **Wytaske, Thomas Anton**
**401 First Avenue S.E.**
**Pine Island, MN 55963 (US)**

(74) Representative: **Petersen, Richard Courtenay**
**IBM United Kingdom Patent Operations Hursley Park**
**Winchester Hants. SO21 2JN (GB)**

Courier Press, Leamington Spa, England.

Magnetic disk file machine

The invention relates to magnetic disk file machines and particularly, though not exclusively, to such machines adapted to receive magnetic diskettes of the type disclosed in US 3,668,658.

Prior machines, such as that disclosed in US 4,089,029 have generally included a swingable door for moving a collet into pressure relationship with respect to a driving hub for gripping the disk of such a diskette and drivingly rotating the disk and have included a solenoid for moving a pair of transducers into engagement with the disk and for moving a pressure plate towards an opposite platen portion for holding the disk in the proper plane for data transfer. If only one transducer is required, a pad is used instead of the second transducer. A diskette, that is a disk enclosed in a jacket is thicker than the disk itself, so that to enable a diskette to be inserted in a magnetic disk drive machine, the transducers or the transducer and pad must be separated by a substantial space to avoid damage during insertion or withdrawal. To enable transducing to occur, the transducers or the transducer and pad must be brought together to grip a disk therebetween through openings in the jacket. This is achieved in the prior art US 4,089,029 by energisation of a solenoid which causes the transducers to move from their separated position into contact with the disk.

Problems arise with this arrangement in that the transducers or transducer and pad move directly from an original separated position to a final gripping position so that damage to the rotating disk may occur owing to the relatively wide spacing in the original position, the energisation of the solenoid has to be sufficient to move the transducers or transducer and pad from the original position to the final position, and during use it is necessary to separate the transducers or the transducer and pad to allow transducer carriage movement and this necessitates movement back from the original to the final position to enable transducing to recommence, which is delayed by the relatively wide separation in the original position.

The invention provides a common solution to these problems by the provision of an intermediate position of the transducers or transducer and pad, between the original and final positions, in which intermediate position the transducers or transducer and pad are separated by a distance sufficient to allow transducer carriage movement, but not so great as to cause damage on movement to the final position or unnecessary delay in recommencing transducing. Also by separating the functions of moving from original to intermediate position and from intermediate to final position, and using the solenoid only for movement from intermediate to final position, the size and power of the solenoid can be reduced.

According to the invention, therefore, a magnetic disk drive machine including means for gripping and rotatably driving a magnetic disk within a stationary jacket, a carriage embracing the disk with a pair of opposed parts on opposite sides of the disk and openings in the jacket, at least one of the parts being a magnetic transducer, a yielding connection for at least one of the parts to the remainder of the carriage to make that part a movable part and to allow it to be moved away from the other one of the parts to allow the disk to freely move with respect to the parts, and an electric solenoid mechanically connected to the movable part and operable to cause movement of the movable part with respect to the remainder of the carriage, is characterised by means actuated by a movable member, independent of the solenoid, for moving the movable part between an original position in which it is substantially spaced from the other part and an intermediate position in which it is closer to but still spaced from the other part, the solenoid being effective to move the movable part between its intermediate position and a final position in which the movable part is in contact with the other part or with a disk therebetween.

Preferably, the movable member is an oscillatable shaft and includes an eccentric portion. The mechanical connection between the solenoid and the movable part may include a swingable member acted upon by a spring, the energisation of the solenoid causing movement of the swingable member against the action of the spring to move the movable part in a direction towards the other part.

Conveniently then the eccentric portion is effective on the swingable member so as to move the swingable member between original and intermediate positions corresponding to original and intermediate positions of the movable part and the solenoid being mechanically connected to the swingable member to move the swingable member between intermediate and final positions corresponding to the intermediate and final positions of the movable part. For this purpose, the mechanical connection between the solenoid and the swingable member may include a flexible cable, and the swingable member may have a cavity therein to receive the eccentric shaft portion and a spring be effective on the cable to move the swingable member from its original position to its intermediate position when the oscillatable shaft and the eccentric portion are rotated out of original positions, and a stop for limiting the effectiveness of the spring in moving the swingable part beyond the intermediate position towards the final position of the swingable part, the cavity being of greater transverse dimension than the eccentric portion whereby the solenoid thereafter may be effective to move the swingable member from its intermediate position to its final position.

One embodiment of the present invention described provides a manually operable knob and mechanical connections thereto on one side of a disk drive machine for moving a pair of transducers into intermediate positions and for moving a pressure plate into an intermediate position with respect to an opposite platen portion co-operable with the pressure plate for holding the diskette in a proper plane. A variation is described in which a pressure pad is so moved and with respect to an opposite transducer.

The scope of the invention is defined by the appended claims; and how it can be carried into effect is hereinafter particularly described with reference to the accompanying drawings, in which:—

Figure 1 is a plan view of a magnetic disk assembly or diskette which may be used in a magnetic disk drive machine according to the invention;

Figure 2 is a fragmentary isometric view of a disk drive machine according to the invention;

Figure 3 is a side elevation of the machine;

Figure 4 is a fragmentary isometric end view of part of the machine;

Figure 5 is a partial sectional view, to an enlarged scale, on the lines V—V of Fig. 2;

Figure 6 is a fragmentary sectional view, to an enlarged scale, on the line VI—VI of Fig. 2;

Figure 7 is a partial sectional view, to an enlarged scale, on the line VII—VII of Fig. 2; and

Figure 8 is an isometric view of a transducer carriage for use in a second embodiment of the machine according to the invention.

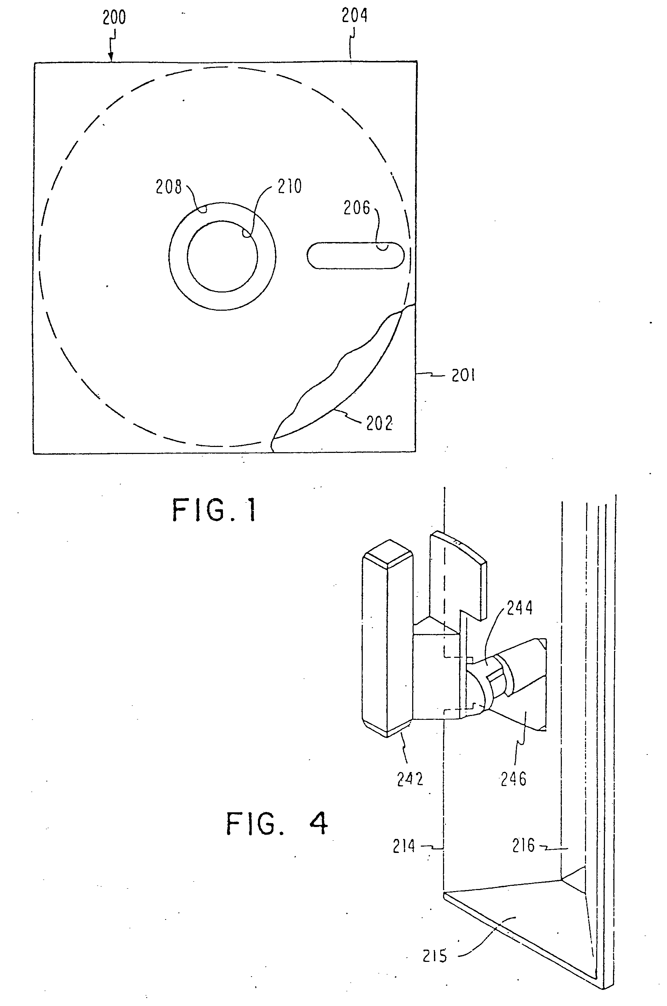

The magnetic disk drive machine described below is for use with a magnetic diskette 200 (Fig. 1) comprising a thin flexible magnetic disk 202 rotatably disposed in a square sleeve jacket 204. The jacket 204 has aligned radially extending slots 206 and central openings 208 in its two thicknesses. The disk 202 has a central hole 210 through it which is of somewhat smaller diameter than the openings 208. The diskette 200 is of the general type disclosed in U.S. Patent Specification No. 3,668,658, inventors Flores and Thompson, and this specification may be referred to for further details of the diskette 200.

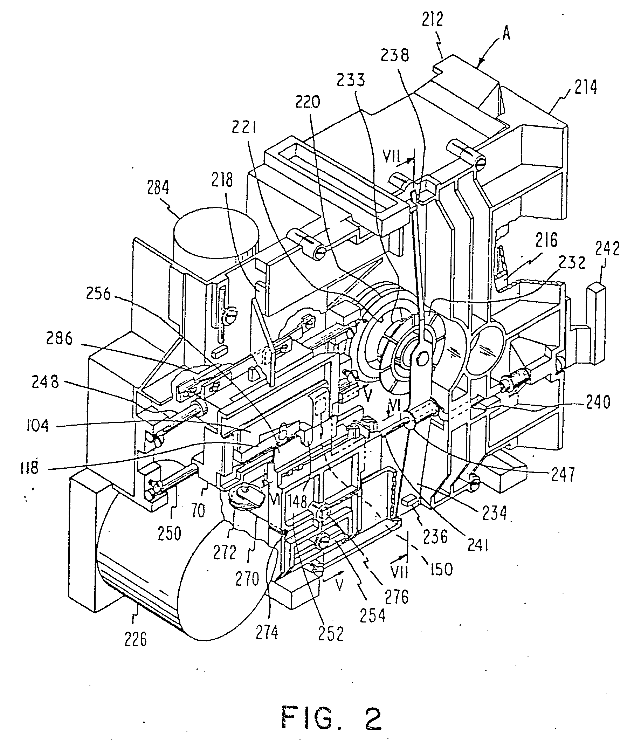

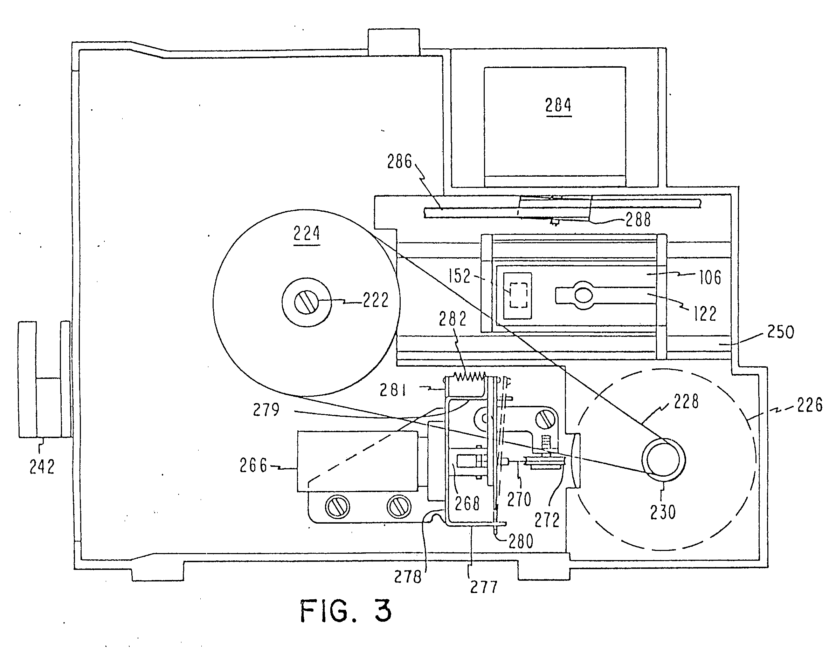

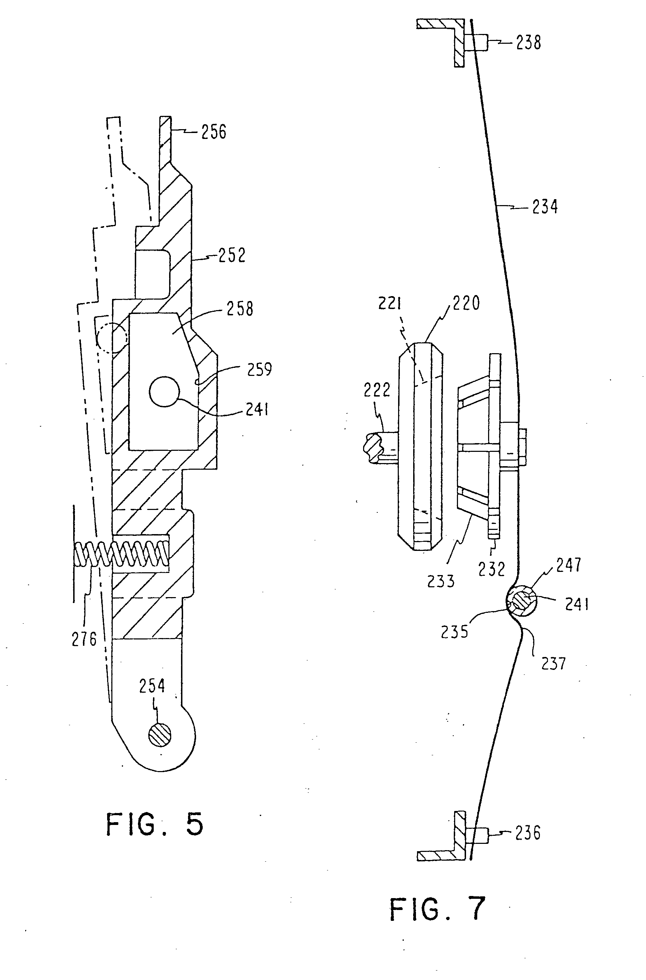

The disk file machine (Figs. 2 and 3) comprises castings 212 and 214 which are fixed together by screws to form a machine base A. The casting 214 at one end (Fig. 4) has a mouth 215 leading to a slot 216 and to between the castings 212 and 214, into which a diskette 200 may be inserted. The casting 212 has a pair of stops 218 extending across the gap between the castings to limit the movement of the diskette 200 into the machine.

A machine hub 220 having a central cavity 221 is carried on a central shaft 222 rotatably disposed in the casting 212. A drive roll 224 (Fig. 3) is fixed on the end of the shaft 222 opposite the hub 220, and is by a belt 228 entrained around the roll 224 and a small diameter roll 230 fixed on the output shaft of an electric motor 226.

A collet 232 (Fig. 7) is rotatably carried on a leaf spring 234 so that the collet 232 is substantially co-axially disposed with respect to the hub 220. The collet 232 has a tapered end portion 233, and the collet is adapted to be moved toward the hub 220 so as to engage a disk 202 between the collet and hub, with the tapered end portion 233 entering the cavity 221 through the hole 210. A spring 234 is pivotally mounted at its lower end on the casting 214 by a boss 236 formed on the casting 214 extending through a hole in the spring 234 adjacent its lower end. The upper end of the spring 234 is slidably disposed in a slot 238 formed in the casting 214. The spring 234 bears at both ends on the casting 214 and due to its inherent resiliency bows outwardly away from the hub 220 so as to separate the collet 232 from the hub 220.

Force is exerted on the spring 234 (Fig. 2) so as to straighten it and to move the collet 232 towards engagement with the hub 220 by a shaft 240 which extends through and is rotatably disposed in portions of the casting 214. A knob 242 fixed to the shaft 240 is disposed at one end of the casting 214 so that, in one position of the knob 242, it overlies the slot 216 and thus prevents a movement of the diskette 200 into or out of the slot 216. The knob 242 is provided with an abutment 244 striking ends of a recess 246 in the casting 214 so as to limit the rotation of the knob 242 and shaft 240 to 90°. The shaft 240 has an eccentrically disposed portion 241 which has a roller 247 disposed on it. The roller 247 (Fig. 7) bears against the spring 234 and rests in a depression 235 in the spring.

A pair of round support rods 248 and 250 are fixed in the casting 214, and a transducer carriage 70 is slidably disposed on the rods 248 and 250. The carriage 70 may be substantially the same as the carriage 70 disclosed in U.S. Patent Specification No. 4,089,029, inventors Castrodale et al. The same reference numerals are used for the carriage and its parts shown herein as in the specification. The carriage 70 (Fig. 2) thus includes a swing arm 104 acted on by a leaf return spring 118. The swing arm 104 carries a transducer 150 and has a hook 148 fixed thereon. The transducer 150 is adapted to bear on one side of the disk 202 when the diskette 200 is positioned in the machine. The carriage 70 also has a transducer 152 (Fig. 3) opposite the transducer 150 which is adapted to bear on the other side of the disk 202 and which is carried by a swing arm 106 acted on by a leaf return spring 122. The swing arms 104 and 106 and the transducers 150 and 152 are constrained to move apart and together simultaneously as described in the U.S. Patent Specification No. 4,089,029.

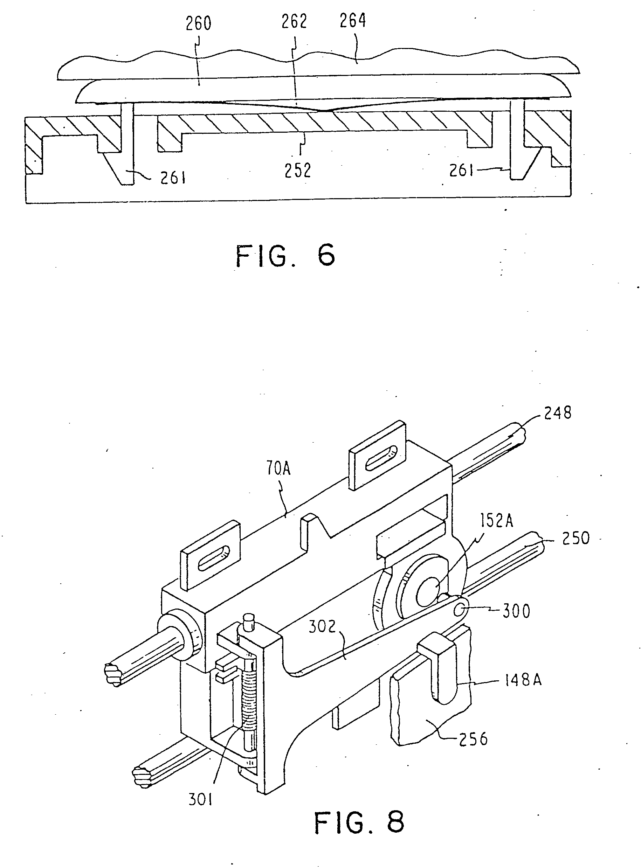

A swingable member is formed by a bail 252 (Fig. 5) swingably disposed on the casting 214 by a pivot rod 254. The bail 252 has a relatively thin top flange 256 underlying the hook 148 and has an end cavity 258 into which the eccentric shaft portion 241 extends. The width of the cavity 258 is considerably greater than the diameter of the shaft portion 241. A pressure plate 260 (Fig. 6) is carried by the bail 252 by means of lug portions 261 which extend through and overlie the back surface of the bail 252. A leaf spring 262 is disposed between the plate 260 and the bail 252 to hold the plate 260 yieldably at the limit of its motion away from the bail 252 set by the lug portions 261. The casting 212 has a platen portion 264 opposite the pressure plate 260 with which the plate 260 may co-operate.

An electric solenoid 266 (Fig. 3) for swinging the bail 252 is disposed on the side of the casting 212 opposite the platen portion 264. The solenoid 266 includes an armature 268, and the armature 268 is connected by means of a flexible cable 270 with the bail 252. The cable 270 (Fig. 2) extends around a rotatable idler pulley 272, which is mounted rotatably about its axis on the casting 212, and through an opening in the casting 212 to the bail 252. The cable 270 extends through a side slot in the bail 252, and an eyelet 274 is fixed on the end of the cable 270 so that the cable 270 may be effective to swing the bail 252 and the pressure plate 260 carried thereby towards the platen portion 264 of the casting 212. A return spring 276 (Fig. 5) between the casting 212 and the bail 252 holds the eyelet 274 in engagement with the bail 252, with the cable 270 being thereby held taut.

The solenoid 266 (Fig. 3) is fixed to the casting 212 by a U-shaped bracket 278 which has upper and lower legs 277 and 279 on either side of the armature 268. A stop plate 280 extends through the lower leg 277 and has a pivotal connection therewith. The stop plate 280 abuts the end of the upper leg 279, and a spring 282 between the plate 280 and an upwardly extending lug 281 of the bracket 278 draws the stop plate 280 into abutment with the leg 279. The stop plate 280 when in contact with the end of the bracket leg 279 is in close proximity to the end of the armature 268; and the cable 270 extends through a relatively small hole in the stop plate 280.

The transducer carriage 70 (Fig. 2) is moved along the rails 248 and 250 by electrical stepping motor 284, so as to register the transducers 150 and 152 with different concentric tracks on the disk 202. The motor 284 is connected to the carriage 70 by a flexible band 286 which is fixed at its ends to the carriage 70 and extends around a roll 288 fixed on the output shaft of the motor 284.

In operation, a diskette 200 is inserted into the slot 216 with its edge 201 (Fig. 1) leading, whilst the knob 242 (Fig. 4) is out of alignment with the slot 216. The roller 247 (Fig. 7) lies in the depression 235 of the spring 234, and the collet 232 is at its maximum distance from the hub 220 permitting the free passage of the diskette 200 between the collet 232 and the hub 220. The offset shaft portion 241 (Fig. 5) is in contact with the inner surface 259 of the cavity 258, and the shaft portion 241 thus holds the bail 252 swung outwardly from the casting 214 at a maximum distance. With the bail 252 in this position, the bail flange 256 acts on the hook 148 of the carriage assembly 70 and holds the transducers 150 and 152 out of engagement with each other so that the diskette 200 may pass between the transducers. The bail 252 also holds the pressure plate 260 out of engagement with the platen portion 264 so that the diskette 200 may pass between the pressure plate 260 and the platen portion 264. The diskette 200 is moved to the limit of its movement into the machine into contact with the stops 218, and the centre of the disk hole 210 at this time is coaxial with the axes of the collet 232 and the hub 220. With the bail 252 being at its limit of its movement under the action of the eccentric shaft portion 241, the cable 270 is under tension; and the cable 270 holds the stop plate 280 in its dotted-line position (Fig. 3) against the action of the spring 282 and out of contact with the end of the bracket leg 279. The bail 252 under these conditions may be said to be in its original position at the limit of its swinging movement away from the platen portion 264 and casting 214, and the transducers 150 and 152 and the pressure plate 260 may be said to have corresponding original positions.

With the diskette 200 completely inserted into the machine and in contact with the stops 218, the knob 242 (Fig. 2) and the shaft 240 are swung through 90°. This has the effect of swinging the roller 247 downwardly, out of the depression 235 in the spring 234 and onto a rounded projection 237 in the spring. This substantially straightens the spring 234 and moves the tapered end portion 233 of the collet 232 through the hole 210 in the disk 202 and the central cavity 221 of the hub 220, to cause the disk 202 to be gripped between the hub 220 and the collet 232. The hub 220 is driven from the motor 226 through the belt 228 and rolls 224 and 230, and the disk 202 thus rotates within the jacket 204 which remains stationary.

This movement of the knob 242 and shaft 240 through 90° also moves the eccentric shaft portion 241 out of engagement with the surface 259 of the cavity 258, allowing the spring 282 to swing the stop plate 280 against the end of the bracket leg 279. The stop plate 280 in moving into contact with the bracket leg 279 acts on the armature 268 and, through the cable 270 and eyelet 274, pulls the bail 252 into an intermediate position against the action of the spring 276, this intermediate position of the bail 252 being closer to the platen portion 264 and the casting 214 than the original position of the bail. The pressure plate 260 is closer to the diskette 200 and to the platen portion 264 than previously, and the flange 256 still supports the hook 148 and the swing arm 104 of the carriage 70 so that the transducer 150 and 152 are still out of contact with the disk 202, which is between them, but are closer together than previously. The pressure plate 260 and the transducers 150 and 152 may thus be said to be in intermediate positions corresponding to the intermediate position of the bail 252 under the action of the spring 282.

The bail 252, the transducers 150 and 152 and the pressure plate 260 are moved from their intermediate positions to their final positions under the action of the solenoid 266. When the solenoid 266 is energised for this purpose, the armature 268 is pulled into the solenoid and the cable 270 passing around the pulley 272 pulls on the bail 252 and moves it toward the casting 214 and platen portion 264. The eccentric shaft portion 241 is at this time loose within the cavity 258 and does not restrain or otherwise act on the bail 252. The spring 262 between the bail 252 and the pressure plate 260 acts on the latter at this time and causes the pressure plate 260 to grip the diskette 200 between it and the platen portion 264 for holding the disk 202 in its proper plane for a data transfer using the transducers 150 and 152. With this swinging movement of the bail 252, its flange 256 has moved out of contact with the hook 148, and the springs in the carriage assembly 70, including the springs 118 and 122, cause the transducers 150 and 152 to move into engagement with the disk 202. The transducers 150 and 152 extend through the slots 206 in the jacket 204, and data transfer may then take place between the transducers 150 and 152 and the disk 202.

If the transducers 150 and 152 are to be moved out of contact with the disk 202, the solenoid 266 is de-energised. The spring 276 will then move the bail 252 back into its intermediate position. The bail 252 in this position has its flange 256 acting on the hook 148, and the transducers 150 and 152 are thereby drawn out of engagement with the disk 202 and are in their intermediate positions. The pressure plate 260 is likewise moved out of position for gripping the diskette 200 between it and the platen portion 264 and is in its intermediate position. When data transfer is again desired, the solenoid 266 is energised, moving the parts back into their final positions.

When it is desired to remove the diskette 200 from the machine, the knob 242 is rotated through 90°. The roller 247 moves into the depression 235 of the spring 234, and the spring 234 resiles to its original bowed disposition in which the collet 232 releases the disk from the machine hub 220 (Fig. 7). At the same time, the offset shaft portion 241 acting on the surface 259 of the cavity 258 swings the bail 252 back into its original position. In this original position, as above-described, the flange 256 acts on the hook 148 to separate the transducers 150 and 152, and the pressure plate 260 is back in its original remote position with respect to the platen portion 264 so as completely to release the diskette 200. Because the diskette 200 is free of the collet 232, the transducers 150 and 152 and the pressure member 260, and because the knob 242 is now out of alignment with the slot 216, the diskette 200 may be drawn back out of the machine to be released therefrom.

Because the solenoid 266 is only used for moving the transducers 150 and 152 and the pressure plate 260, as well as the bail 252, for the relatively short throws between their intermediate and final positions, rather than for larger throws between their original and final positions, the solenoid 266 may be considerably shorter than would otherwise be required. Because, when the solenoid 266 is de-energised, the transducers 150 and 152 are out of engagement with the disk 202, it is only necessary to de-energise the solenoid 266 in order to move the transducers out of engagement with the disk for reducing transducer and disk wear when no reading or writing action is desired or during the time the carriage 70 is moved radially of the disk for magnetic track changing on the disk. If the electronics associated with the solenoid 266 malfunction and de-energise the solenoid when this is not desired, the spring 276 is effective to move the bail 252 and the transducers 150 and 152 into their intermediate positions in which the transducers are disengaged from the disk 202, and undue disk and transducer wear is obviated. If the electronics connected with the solenoid 266 malfunction to maintain the solenoid 266 energised when it is not desired that the transducers 150 and 152 shall remain engaged with the disk 202, the width of the cavity 258 is sufficiently small so that the eccentric shaft portion 241 is effective to move the bail 252, the pressure plate 260 and the transducers 150 and 152 into their original or fully retracted positions when the knob 242 is turned appropriately. Therefore, the diskette 200 may be removed from the machine through the slot 216 even with this malfunction.

Because it is only necessary for the solenoid 266 to move the transducers 150 and 152, the pressure plate 260 and the bail 252 for portions of their complete throws, the solenoid 266 may also be relatively small in diameter. It is desired that the disk file machine be as thin as possible (that is as short as possible in the direction of the longitudinal centre lines of the hub 220 and collet 232). The small diameter of the solenoid 266 and the placement of the solenoid with its longitudinal axis in a plane at right angles to the axes of the hub 220 and collet 232 and parallel with the plane of the disk 202 enable the disk file machine to be quite thin. This result also is attained due to the fact that the solenoid 266 is disposed on the side of the machine opposite that carrying the swingable bail 252 which thus has no more room for components. The use of the collet-carrying leaf spring 234, which has a minimum dimension (its thickness) along the longitudinal axes of the hub 220 and collet 232 and has its width in the same direction as the slot 216 and castings 212 and 214 and which moves in the direction along the longitudinal axes of the hub 220 and collet 232 for only the distance required to clamp the disk 202 between the collet 232 and hub 220, also allows the attainment of a relatively thin disk drive machine. The electrical stepping motor 284 for moving the transducer carriage 70 has its axis vertical and in a plane at right angles to the longitudinal axes of the hub 220 and collet 232 for this object.

In a second embodiment of magnetic disk drive machine, there is only one transducer in place of the two transducers in that previously described. The machine is similar to that shown in Figures 2 to 7 a transducer carriage 70A (Fig. 8) is substituted for the carriage 70 on the rods 248 and 250, and carries only a single transducer 152A. A pressure pad 300 is carried by a swing arm 302 which is pivotally mounted on the carriage 70A and is acted on by a spring 301 to urge the pad 300 toward the transducer 152A to hold a disk against the transducer. The arm 302 has a hook portion 148A, engageable by the bail flange 256, as described above. The pad 300 may thereby be drawn away from the transducer 152A and out of engagement with the disk so as to allow the removal and insertion of a diskette between the pad 300 and the transducer 152A when the flange-carrying bail is swung outwardly. A similar pressure pad-transducer carriage is shown in U.S. Patent Specification No. 3,678,481 (Dalziel et al) to which reference may be made for details.

**Claims**

1. A magnetic disk drive machine including means (220, 232) for gripping and rotatably driving a magnetic disk (202) within a stationary jacket (204), a carriage (Fig.2,70; Fig.8,70A) embracing the disk with a pair of opposed parts (Figs.2,150, Fig.3,152; Fig.8,152A,300) on opposite sides of the disk and openings (206) in the jacket, at least one of the parts being a magnetic transducer (152;152A), a yielding connection (302) for at least one of the parts (150,152;300) to the remainder of the carriage to make that part a movable part, and to allow it to be moved away from the other one of the parts to allow the disk to move freely with respect to the parts, and an electric solenoid (266) mechanically connected to the movable part and operable to cause movement of the movable part with respect to the remainder of the carriage, characterised by means actuated by a movable member (240), independent of the solenoid, for moving the movable part between an original position in which it is substantially spaced from the other part and an intermediate position in which it is closer to but still spaced from the other part, the solenoid being effective to move the movable part between its intermediate position and a final position in which the movable part is in contact with the other part or with a disk therebetween.

2. A machine according to claim 1, in which the movable member is an oscillatable shaft (240) and includes an eccentric portion (241).

3. A machine according to claim 1 or 2, in which the mechanical connection between the solenoid and the movable part includes a swingable member (252) acted upon by a spring (276), the energisation of the solenoid causing movement of the swingable member against the action of the spring to move the movable part in a direction towards the other part.

4. A machine according to claim 3 as appendant to claim 2, in which the eccentric portion (241) is effective on the swingable member (252) so as to move the swingable member between original and intermediate positions corresponding to the original and intermediate positions of the movable part, and the solenoid being mechanically connected to the swingable member to move the swingable member between the intermediate position and a final position corresponding to the final position of the movable part.

5. A machine according to claim 4, in which the mechanical connection between the solenoid and the swingable member includes a flexible cable (270).

6. A machine according to claim 5, in which the swingable member (252) has a cavity (258) therein to receive the eccentric shaft portion (241), a spring (282) is effective on the cable (270) to move the swingable member from its original position to its intermediate position when the oscillatable shaft and the eccentric portion are rotated out of original positions, a stop leg (279) limits the effectiveness of the spring (282) in moving the swingable part beyond the intermediate position towards the final position, and the cavity (258) is of greater transverse dimension than the eccentric shaft portion (241), whereby the solenoid may be effective to move the swingable member from its intermediate position to its final position.

7. A machine according to any preceding claim, in which both parts (150, 152) are magnetic transducers and are mechanically connected together to be constrained to move together and apart simultaneously.

8. A machine according to claim 5 or any claim appendant to claim 5, in which the electric solenoid has its axis of movement extending substantially parallel with the plane of the disk and the flexible cable extends from the solenoid around an idler pulley (272).

9. A machine according to claim 2 or any claim appendant to claim 2, in which the means for gripping and rotatably driving a magnetic disk includes a rotatable machine hub (220) and a collet (232) movable by the eccentric shaft portion (241) towards the hub to grip a magnetic disk between the collet and hub.

## Revendications

1. Dispositif d'entraînement de disque magnétique comprenant des moyens (220, 232) pour saisir et entraîner en rotation un disque magnétique (202) à l'intérieur d'une enveloppe fixe (204), un chariot (figure 2, 70; fig. 8, 70A) enserrant le disque par l'intermédiaire de deux parties opposées (fig. 2, 150; fig. 3, 152; fig. 8, 152A, 300) situées de part et d'autre du disque et d'ouvertures (206) dans l'enveloppe, au moins l'une desdites parties étant un transducteur magnétique (152, 152A), un couplage souple (302) reliant au moins l'une des deux parties (150, 152; 300) au reste du chariot pour rendre cette partie mobile et permettre son éloignement de l'autre partie et le libre déplacement du disque par rapport auxdites parties, et un solénoïde électrique (266) couplé mécaniquement à la partie mobile et pouvant être actionné pour provoquer le mouvement de la partie mobile par rapport au reste du chariot, caractérisé par des moyens actionnés par un élément mobile (240), indépendant du solénoïde, pour entraîner la partie mobile entre une position originale dans laquelle elle est placée à une distance substantielle de l'autre partie et une position intermédiaire dans laquelle elle est plus rapprochée mais toujours séparée de cette dernière, le solénoïde pouvant assurer le mouvement de la partie mobile entre sa position intermédiaire et une position finale dans laquelle elle est en contact avec l'autre partie ou avec un disque disposé entre les deux parties.

2. Dispositif selon la revendication 1 dans lequel l'élément mobile est un arbre oscillant (240) et comporte une partie excentrique (241).

3. Dispositif selon la revendication 1 ou 2 dans lequel le couplage mécanique entre le solénoïde et la partie mobile comprend un élément pivotant (252) sollicité par un ressort (276), l'excitation du solénoïde provoquant le mouvement de l'élément pivotant à l'encontre de la force exercée par le ressort pour entraîner la partie mobile vers l'autre partie.

4. Dispositif selon la revendication 3 dépendant de la revendication 2, dans lequel la partie excentrique (241) agit sur l'élément pivotant (252) de façon à déplacer ce dernier entre des positions originale et intermédiaire correspondant aux positions originale et intermédiaire de la partie mobile, le solénoïde étant mécaniquement couplé à l'élément pivotant pour entraîner ce dernier entre la position intermédiaire et une position finale correspondant à la position finale de la partie mobile.

5. Dispositif selon la revendication 4 dans lequel le couplage mécanique entre le solénoïde et l'élément pivotant comporte un câble flexible (270).

6. Dispositif selon la revendication 5 dans lequel l'élément pivotant (252) présente une cavité (258) pour recevoir la partie excentrique (241) de l'arbre, un ressort (282) agit sur le câble (270) pour déplacer l'élément pivotant de sa position originale à sa position intermédiaire lorsque l'arbre oscillant et la partie excentrique sont entraînées en rotation hors de leurs positions originales, une jambe de butée (279) interdit au ressort (282) d'entraîner la partie pivotante au-delà de la position intermédiaire vers la position finale, et la cavité (258) présente une dimension transversale plus importante que la partie excentrique (241) de l'arbre, ce qui permet au solénoïde de pouvoir déplacer l'élément pivotant de sa position intermédiaire à sa position finale.

7. Dispositif selon l'une quelconque des revendications précédentes dans lequel les deux parties (150, 152) sont des transducteurs magnétiques et sont mécaniquement couplées l'une à l'autre pour être contraintes de se rapprocher et de s'éloigner l'une de l'autre d'une manière simultanée.

8. Dispositif selon la revendication 5 ou une revendication quelconque dépendant de la revendication 5, dans lequel l'axe de mouvement du solénoïde électrique est pratiquement parallèle au plan du disque et le câble flexible se prolonge à partir du solénoïde autour d'un poulie de guidage (272).

9. Dispositif selon la revendication 2 ou une revendication quelconque dépendant de la revendication 2, dans lequel les moyens de saisie et d'entraînement en rotation d'un disque magnétique comprennent un moyeu-machine rotatif (220) et un mandrin (232) entraîné par la partie d'arbre excentrique (241) vers le moyeu pour saisir un disque magnétique entre le mandrin et le moyeu.

## Patentansprüche

1. Magnetplattenantriebsgerät mit Mitteln (220, 232) für das Ergreifen und drehbare Antreiben einer Magnetplatte (202) innerhalb einer stationären Hülle (204), einem Wagen (Fig. 2, 70; Fig. 8, 70A), der die Platte mit einem Paar gegenüberstehender Teile (Fig. 2, 150; Fig. 3, 152; Fig. 8, 152A, 300) auf entgegengesetzten Seiten der Platte umgreift und mit Öffnungen (206) in der Hülle, wobei zumindest eines der Teile ein magnetischer Wandler (152; 152A) ist, mit einer federnden Verbindung (302) für wenigstens eines der Teile (150, 152; 300) mit dem Rest des Wagens, um dieses Teil zu einem beweglichen Teil auszugestalten und es ihm zu erlauben, von dem anderen Teil wegbewegt werden zu können, damit sich die Platte frei gegenüber den Teilen bewegen kann, und mit einem Elektromagnet (266), der mechanisch mit dem beweglichen Teil verbunden ist und für die Verursachung der Bewegung des beweglichen Teils im Hinblick auf den Rest des Wagens vorgesehen ist, gekennzeichnet durch Mittel, welche durch ein bewegliches Teil (240) betätigt wird, unabhängig von dem Magneten, um das bewegliche Teil zwischen einer Ausgangsposition, in der es wesentlich beabstandet vom anderen Teil ist, und eine Zwischenposition, in der es näher aber immer noch entfernt von dem anderen Teil ist, wobei der Magnet dazu dient, um das bewegliche Teil zwischen seiner Zwischenposition und einer Endposition zu bewegen, in der das bewegliche Teil in Kontakt mit dem anderen Teil oder mit einer dazwischenliegenden Platte steht.

2. Gerät gemäß Anspruch 1, bei dem das bewegliche Teil eine schwingbare Welle (240) ist und einen exzentrischen Teil (241) aufweist.

3. Gerät gemäß Anspruch 1 oder 2, bei dem die mechanische Verbindung zwischen dem Magnet und dem beweglichen Teil ein verschwenkbares Teil (252) enthält, auf das eine Feder (276) einwirkt, wobei die Erregung des Magneten die Bewegung des schwenkbaren Teils gegen die Wirkung der Feder verursacht, um das bewegliche Teil auf das andere Teil hin zu bewegen.

4. Gerät gemäß Anspruch 1 in Abhängigkeit von Anspruch 2, bei dem der exzentrische Teil (241) auf das schwenkbare Teil (252) wirkt, um das verschwenkbare Teil zwischen der Ausgangs- und der Zwischenposition, entsprechend der Ausgangs- und Zwischenposition des beweglichen Teils, zu bewegen und wobei der Magnet, mechanisch verbunden mit dem schwenkbaren Teil, das schwenkbare Teil zwischen der Zwischenposition und einer Endposition verschiebt, die der Endposition des beweglichen Teils entspricht.

5. Gerät gemäß Anspruch 4, bei dem die mechanische Verbindung zwischen dem Magneten und dem verschwenkbaren Teil ein flexibles Kabel (270) enthält.

6. Gerät gemäß Anspruch 5, in dem das verschwenkbare Teil (252) eine Vertiefung (258) aufweist, um darin den exzentrischen Wellenteil (241) aufzunehmen, eine Feder (282) auf das Kabel (270) einwirkt, um das verschwenkbare Teil von seiner Ausgangsposition zu seiner Zwischenposition zu verschieben, wenn die oszilierende Welle und der exzentrische Teil aus der Ausgangsposition verdreht werden, ein Anschlagsbein (279) die Wirkung der Feder (282) in Bewegung des schwenkbaren Teils über die Zwischenposition auf die Endposition hinaus hindert, und die Vertiefung (258) einen größeren Querschnitt aufweist als der exzentrische Wellenteil (241), wobei der Magnet wirksam sein kann, um das verschwenkbare Teil von seiner Zwischenposition zu seiner Endposition zu bewegen.

7. Gerät gemäß einem der vorhergehenden Ansprüche, bei dem beide Teile (150, 152) magnetische Wandler sind und mechanisch derart miteinander verbunden sind, daß sie zwangsweise simultan aufeinander zu und voneinander weg bewegt werden.

8. Gerät gemäß Anspruch 5 oder einem von Anspruch 5 abhängenden vorhergehenden Anspruch, bei dem die Bewegungsachse des elektrischen Magnets sich im wesentlichen parallel zur Plattenebene erstreckt und das flexible Kabel sich vom Magnet ausgehend um eine Mitlaufrolle (272) erstreckt.

9. Gerät gemäß Anspruch 2 oder einem der von Anspruch 2 abhängigen Ansprüche, bei dem die Mittel für das Ergreifen und drehbare Antreiben einer Magnetplatte eine drehbare Maschinennabe (220) und einen Hals (232) umfassen, der durch den exzentrischen Wellenteil (241) auf die Nabe zu bewegbar ist, um die Magnetplatte zwischen Hals und Nabe einzuklemmen.

FIG. 1

FIG. 4

FIG. 2

FIG. 3

FIG. 5

FIG. 7

4

FIG. 6

FIG. 8